# DEMANDE DE BREVET EUROPEEN

(11) **EP 2 538 293 A1**
(43) Date de publication de la demande: **26.12.2012**
(21) Numéro de dépôt: 11170951.5
(22) Date de dépôt: 22.06.2011
(51) Int. Cl.: G05B 19/409

(54) **Mode manuel programmé**

(71) Demandeur: Tornos SA, 2740 Moutier (CH)
(72) Inventeur: Currat, Jacques, 2740 Moutier (CH)
(74) Mandataire: BOVARD AG

(57) **Abrégé**

La présente invention concerne un procédé pour préparer et pour régler les organes de la machine-outil pour l'usinage d'une pièce. La machine-outil est agencée pour exécuter des programmes d'usinage. Le procédé comprend : (a) la définition (501) d'au moins un mouvement manuel ; (b) la génération (503) d'un programme source pour ledit mouvement manuel ; (c) la compilation (505) du programme source pour obtenir un programme exécutable ; et (d) l'exécution (507) dudit mouvement de la même manière que ledit programme d'usinage pour usiner la pièce.

## Description

### DOMAINE DE L'INVENTION

L'invention se rapporte à un procédé pour préparer et pour régler les organes de la machine-outil pour l'usinage d'une pièce, le procédé décrit la méthode et les fonctions nécessaires pour remplacer le traditionnel mode de fonctionnement manuel par un mode de fonctionnement manuel programmé. L'invention se rapporte aussi à un programme d'ordinateur, à une commande numérique et à un dispositif pour la mise en oeuvre de ce procédé.

### DESCRIPTION DE L'ART ANTERIEUR

Une machine-outil telle qu'une décolleteuse, comprend généralement au moins une broche pour recevoir la pièce à usiner. Celle-ci se présente généralement sous forme d'une barre métallique ou non. Cette ou ces broches sont généralement agencées pour faire tourner la pièce à usiner autour de son axe. L'usinage même est effectué par des outils placés autour de la ou des broches. Le pilotage des machines-outils modernes est généralement contrôlé par une commande numérique.

La décolleteuse est une machine-outil de grande production, c'est-à-dire qu'elle est appelée à répéter plusieurs fois la même pièce. Cette particularité se traduit aussi par la possibilité d'utiliser une architecture de commande numérique différente de celle des commandes numériques traditionnelles. La différence d'architecture réside dans le besoin d'une exécution très rapide d'un même programme ou d'un même ensemble de programmes.

La présente invention se réfère à ce type de commande numérique, qui répond à ce besoin particulier des décolleteuses. L'interpolateur (calculateur de trajectoires) effectue le calcul de l'ensemble des trajectoires avant le début de l'usinage et les résultats de ces calculs sont placés par exemple dans des tables circulaires qui seront ensuite exécutées en continu par les unités de pilotage des axes et des broches. Cette méthode permet d'une part de calculer et d'optimiser les mouvements sans les contraintes temporelles des commandes numériques traditionnelles et d'autre par d'exécuter les mouvements précalculés sans nécessiter de calculs compliqués en temps réel.

Les commandes numériques de machines-outils sont équipées de modes de fonctionnement et entre autre d'un mode de fonctionnement automatique et de plusieurs modes de fonctionnement manuels. Le mode automatique permet d'exécuter des programmes alors que les modes de fonctionnement manuels permettent de déplacer et de positionner les organes de la machine au moyen de boutons de commande ou d'une manivelle électronique.

Une commande numérique ne permet toutefois pas d'exécuter manuellement les mouvements ou séquences de mouvements décrits dans un programme d'usinage. Cette fonctionnalité très utile pour l'opérateur lui permettrait d'effectuer le réglage de sa machine et des outils dans les mêmes conditions que celles données par le programme d'usinage.

L'objet de la présente invention est de surmonter les problèmes des solutions connues.

### RESUME DE L'INVENTION

La présente invention propose donc une solution pour créer un mode de fonctionnement manuel programmé comme expliquée plus en détail plus loin.

A cet effet, l'invention a pour objet un procédé pour préparer et pour régler les organes de la machine-outil pour l'usinage d'une pièce selon la revendication 1.

La solution proposée permet d'offrir plus de performances aux fonctions manuelles (possibilité de mouvement manuel d'un outil nécessitant une combinaison de mouvement de plusieurs axes et possibilité de mouvements dans le cadre d'une pièce incluant les décalages outils et pièce) et de simplifier le logiciel PLC (« programmable logic controller ») (diminution du risque potentiel de défauts par la réduction du nombre de chemins de traitement des données) car les modes de fonctionnement ne seront pas considérés par la partie « temps réel » de la machine-outil. Tous les mouvements sont donc exécutés comme des programmes, de la même manière que le mode de fonctionnement automatique (mode de fonctionnement unique du temps réel).

L'invention a aussi pour objet un programme d'ordinateur agencé pour effectuer le calcul des trajectoires manuelles et leur insertion dans un programme avec une structure identique à ceux réalisés pour fonctionner en mode automatique et des fonctions dans la commande numérique pour permettre l'exécution de ce programme en avant et en arrière et sous le contrôle des boutons de commande + et -, de l'override pour la modulation de vitesse ou de la manivelle électronique.

L'invention a également pour objet un dispositif agencé pour effectuer le procédé décrit ci-dessus.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- - figure 1 :: un bloc-diagramme illustrant des flux d'informations dans les modes automatique et manuel d'une commande numérique traditionnelle,
- - figure 2 :: un bloc-diagramme illustrant les flux d'informations dans le mode de fonctionnement unique du temps réel, décrit par la présente invention pour usiner une pièce et pour préparer la machine à cet usinage,
- - figure 3 :: une graphique pour illustrer la position d'un axe en fonction du temps telle qu'elle peut-être décrite dans un programme pour le mode manuel,
- - figure 4 :: une autre graphique pour illustrer la position d'un axe en fonction du temps telle qu'elle peut-être décrite dans un programme pour le mode manuel, et
- - figure 5 :: un organigramme qui illustre le procédé selon un aspect de la présente invention.

### DESCRIPTION DETAILLEE DES MODES DE REALISATION

En se reportant aux dessins, un procédé pour préparer et pour régler les organes de la machine-outil pour l'usinage d'une pièce en générant un mode manuel programmé selon différents aspects conformément à la présente invention est maintenant expliqué plus en détail.

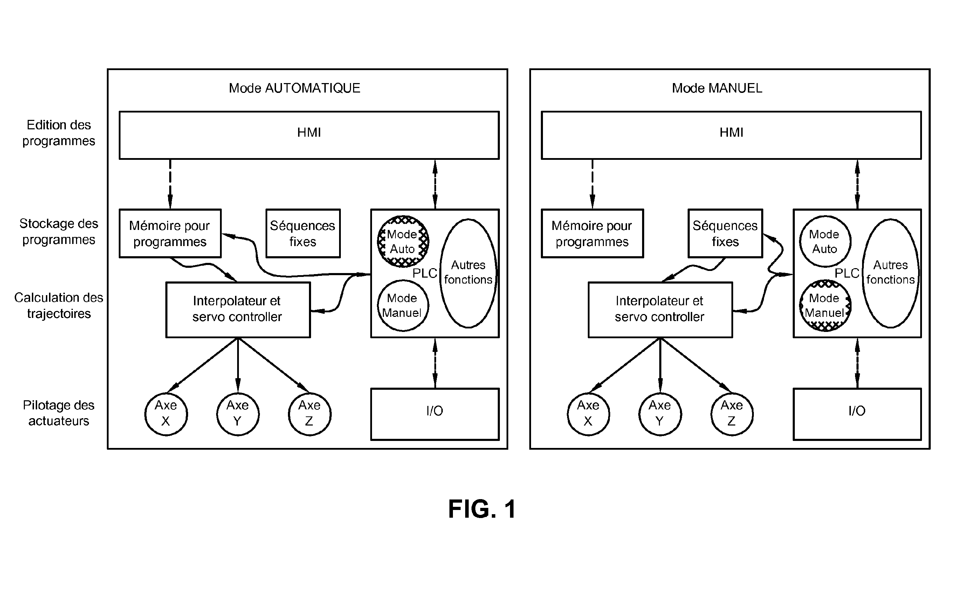

La figure 1 montre un schéma simplifié qui illustre les flux d'informations dans les modes automatique et manuel d'une commande numérique traditionnelle. Sur cette figure HMI est l'abréviation de « human machine interface ». On voit que la réalisation des modes manuels par de petits programmes, traités par le mode automatique allégera le logiciel PLC des fonctionnalités « mode manuel ».

Le logiciel PLC (ou PMC « programmable machine control ») est une des parties configurables de la commande numérique. Il s'agit d'un processeur ou d'une tâche mise à disposition du fabricant de la machine pour réaliser la logique de fonctionnement de sa machine et de la commande numérique. Le mode manuel représente une part importante de ce logiciel.

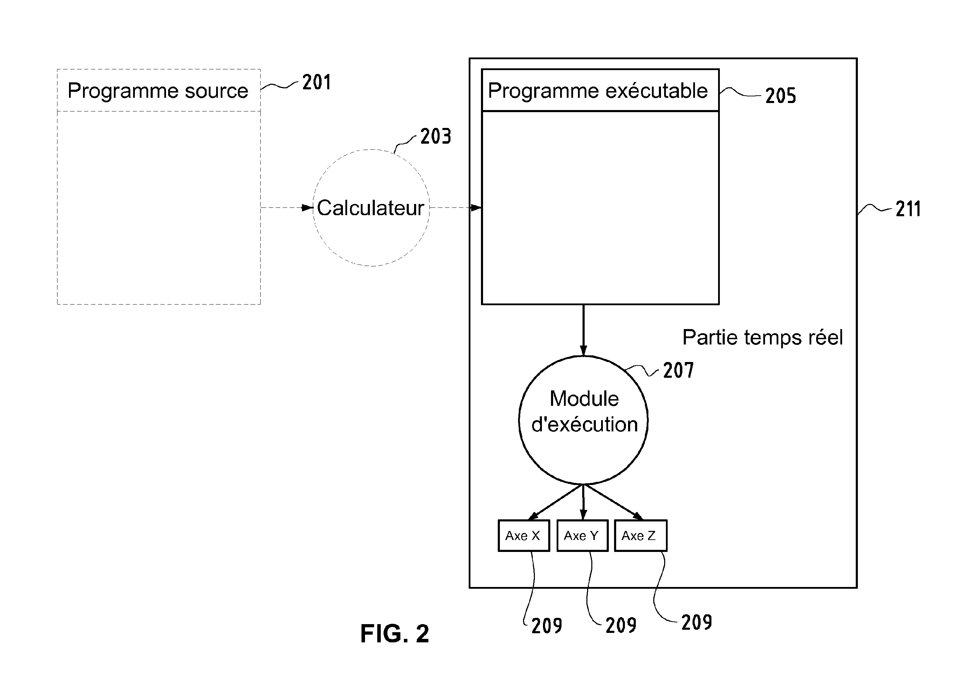

La figure 2 montre un bloc-diagramme qui illustre les flux d'informations dans le mode de fonctionnement unique du temps réel, décrit par la présente invention pour usiner une pièce et pour préparer la machine à cet usinage. Les mouvements manuels sont décrits par le calculateur sous la forme d'une position en fonction du temps avec un point de départ correspondant à la position actuelle de l'axe. C'est cette position que le logiciel « temps réel » choisira pour commencer son exécution. Le programme source 201 aussi appelé le code source est défini par l'opérateur. Ce programme source définit comment la machine-outil effectue les mouvements d'usinage ou les mouvements manuels. Mouvements d'usinage signifient mouvements des outils définis par le programme pour usiner la pièce. Mouvements manuels signifient mouvements des outils contrôlés par l'opérateur au moyen du clavier ou de la manivelle, il s'agit donc de mouvements libres sur une trajectoire prédéfinie. Un calculateur 203 est agencé pour traduire un programme source 201 écrit dans un langage de programmation en un programme exécutable 205 qui est donc le langage de la machine.

Un module d'exécution 207 est agencé pour exécuter le programme exécutable. Par conséquent le module d'exécution 207 donne des ordres aux outils pour se déplacer selon les différents axes 209. Le programme exécutable 205, le module d'exécution 207 et les axes 209 appartiennent à la partie « temps réel » 211 de la machine-outil.

La présente invention permet de simplifier le logiciel « temps réel » qui exécutera selon la présente invention les mouvements manuels des organes (tels qu'un outil) de la machine-outil de la même manière qu'un programme d'usinage. Cela signifie que chaque type de mouvements manuels sera décrit dans un petit programme qui pourra être exécuté en avant ou en arrière à la manière d'un programme automatique.

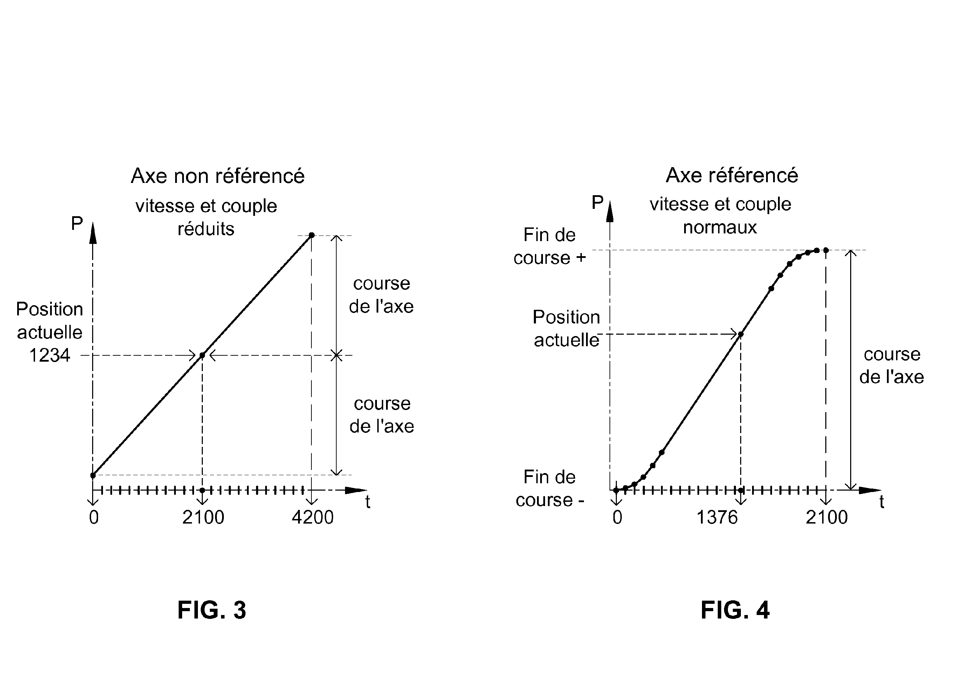

Les mouvements manuels sont décrits par le calculateur 203 sous la forme d'une position en fonction du temps avec un point de départ correspondant à la position actuelle de l'axe d'un élément impliqué. C'est cette position que le logiciel « temps réel » choisira pour commencer son exécution. Les graphiques des figures 3 (pour l'axe non référencé) et 4 (pour l'axe référencé) montrent un exemple de ces petits programmes de mouvements manuels.

Les graphiques montrent la position de l'axe en fonction du temps. L'exécution de ces mouvements en manuel signifie un remplacement du temps par une horloge manuelle pilotable à l'aide de boutons ou de la manivelle. Axes non référencés signifient des axes équipés d'une mesure incrémentale et sur lesquels la référence est encore inconnue. Axes référencés signifient des axes équipés d'une mesure absolue ou incrémentale mais sur lesquels la référence est déjà connue. La course de l'axe signifie la distance de mouvement de l'axe. Par exemple, si l'axe X peut se déplacer entre les valeurs -5 mm et + 100 mm, sa course sera alors de 105 mm.

Le logiciel « temps réel » effectuera la lecture de ces petits programmes en avant ou en arrière en fonction des commandes des touches +, - ou de la manivelle de l'interface de la machine-outil. La vitesse de déplacement étant modulée par la valeur du sélecteur d'override.

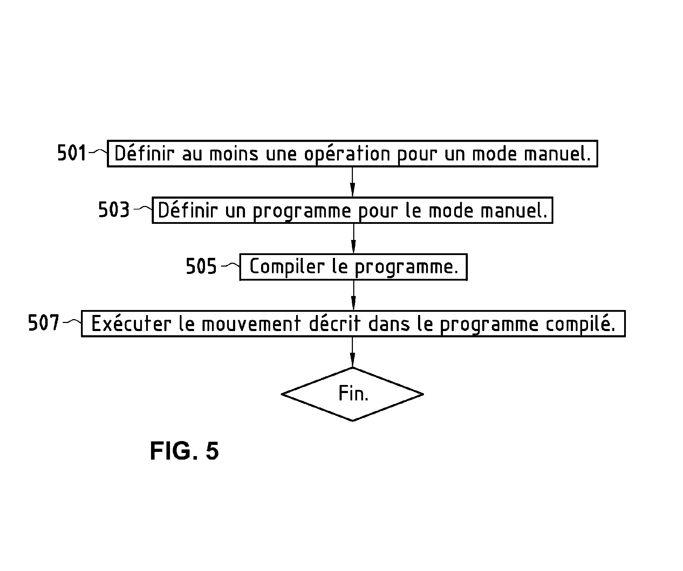

L'organigramme de la figure 5 résume le procédé décrit ci-dessus. A l'étape 501 l'opérateur définit au moins un mouvement manuel. A l'étape 503 le calculateur 203 génère un programme pour le mouvement manuel. Puis à l'étape 505, le calculateur compile ce programme source généré pour obtenir un programme exécutable. A l'étape 507 la partie « temps réel » 211 exécute le programme exécutable, c.à.d. que l'on exécute le mouvement manuel de la même manière qu'un programme d'usinage. Ce mouvement peut être défini par exemple en utilisant une manivelle électronique.

En utilisant la solution selon la présente invention on peut garantir les résultats suivants pour l'utilisateur :
- Mouvement manuel d'un seul axe ;
- Mouvement manuel d'un outil nécessitant une combinaison de mouvement de plusieurs axes ; et
- Mouvement dans le cadre d'une pièce incluant les décalages outils et pièce.

Dans le logiciel PLC, écrit par le fabricant de la machine il n'y a plus de notion de mode de fonctionnement dans la gestion des mouvements.

On pourrait aussi envisager plusieurs variations dans les configurations expliquées ci-dessus sans sortir du cadre de la présente invention.

## Revendications

1. Un procédé pour préparer et pour régler les organes de la machine-outil pour l'usinage d'une pièce, la machine-outil étant agencée pour exécuter des programmes d'usinage, le procédé comprend :
• la définition (501) d'au moins un mouvement manuel ;
• la génération (503) du programme adapté pour ledit mouvement manuel ; et
• l'exécution (507) dudit mouvement de la même manière que ledit programme d'usinage pour usiner la pièce.

2. Le procédé selon la revendication 1, dans lequel ledit mouvement est défini en décrivant le mouvement d'un organe de la machine-outil sous la forme de positions en fonction du temps.

3. Le procédé selon la revendication 2, dans lequel ledit organe est un outil de la machine-outil.

4. Le procédé selon la revendication 2 ou 3, dans lequel un point de départ pour le mouvement est la position actuelle de l'axe ou des axes dudit organe.

5. Le procédé selon l'une quelconque des revendications, dans lequel l'exécution dudit programme est effectuée en avant ou en arrière.

6. Le procédé selon l'une quelconque des revendications précédentes, dans lequel la définition dudit mouvement est effectuée par l'opérateur en utilisant une manivelle électronique.

7. Le procédé selon l'une quelconque des revendications précédentes, dans lequel le procédé comprend en plus, avant l'exécution, la compilation dudit programme généré pour obtenir un programme exécutable.

8. Le procédé selon l'une quelconque des revendications précédentes, dans lequel la machine-outil n'a pas de mécanismes spécifiques à l'exécution des fonctions manuelles, les fonctions manuelles étant exécutées avec les mécanismes du mode automatique.

9. Le procédé selon l'une quelconque des revendications précédentes, dans lequel tous les mouvements sont exécutés comme des programmes.

10. Le procédé selon l'une quelconque des revendications précédentes, dans lequel le mouvement manuel est un mouvement libre et contrôlé par l'opérateur, sur une trajectoire prédéfinie.

11. Le procédé selon l'une quelconque des revendications précédentes, dans lequel ledit mouvement est exécuté sous le contrôle des touches +, - ou de la manivelle de l'interface de la machine-outil.

12. Un programme d'ordinateur pour une machine outil, le programme d'ordinateur étant agencé pour exécuter le procédé selon l'une quelconque des revendications précédentes lorsque le programme est exécuté sur un ordinateur.

13. Un dispositif pour préparer et pour régler les organes de la machine-outil pour l'usinage d'une pièce, le dispositif étant agencé pour exécuter des programmes d'usinage, le dispositif comprend des moyens pour :
• définir au moins un mouvement manuel ;
• générer un programme pour ledit mouvement manuel ; et
• exécuter ledit mouvement de la même manière que ledit programme d'usinage pour usiner la pièce.

14. Un dispositif selon la revendication 13, dans lequel le programme est généré par un calculateur (203) agencé pour transformer un code source à un code exécutable.

15. Un dispositif selon la revendication 13 ou 14, dans lequel le dispositif est une machine-outil.
